# EUROPEAN PATENT SPECIFICATION

(11) **EP 3 729 805 B1**
(45) Date of publication and mention of the grant of the patent: **25.09.2024**
(21) Application number: 18892445.0
(22) Date of filing: 10.12.2018
(51) Int. Cl.: H04N 13/275, H04N 13/161, H04N 19/597, H04N 19/51, H04N 19/46, G06T 19/00, G06T 17/00, G06T 15/04

(54) **METHOD AND APPARATUS FOR ENCODING AND DECODING VOLUMETRIC VIDEO DATA**
VERFAHREN UND VORRICHTUNG ZUR CODIERUNG UND DECODIERUNG VON VOLUMETRISCHEN VIDEODATEN
PROCÉDÉ ET APPAREIL DE CODAGE ET DE DÉCODAGE DE DONNÉES VIDÉO VOLUMÉTRIQUES

(30) Priority: 20.12.2017 FI 20176137
(43) Date of publication of application: 28.10.2020
(73) Proprietor: Nokia Technologies Oy, 02610 Espoo (FI)
(72) Inventor: MALAMAL VADAKITAL, Vinod Kumar, 33720 Tampere (FI); SCHWARZ, Sebastian, 33900 Tampere (FI)
(74) Representative: Berggren Oy
(86) International application number: PCT/FI2018/050891
(87) International publication number: WO 2019/122504

(56) References cited:
- WO-A1-2015/172227
- US-A1- 2013 187 919
- US-A1- 2017 178 387
- WEI-WEN FENG ET AL: "A deformation transformer for real-time cloth animation", ACM TRANSACTIONS ON GRAPHICS, ACM, NY, US, vol. 29, no. 4, 26 July 2010 (2010-07-26), pages 1 - 9, XP058157844, ISSN: 0730-0301, DOI: 10.1145/1778765.1778845
- AVI: "Scene graphs: Past, Present, and Future", 30 June 2007 (2007-06-30), XP055824160, Retrieved from the Internet <URL:https://web.archive.org/web/20190207215718/http://www.realityprime.com/blog/2007/06/scenegraphs-past-present-and-future/> [retrieved on 20210714]
- RUIZHE WANG ET AL: "Accurate Full Body Scanning from a Single Fixed 3D Camera", 3D IMAGING, MODELING, PROCESSING, VISUALIZATION AND TRANSMISSION (3DIMPVT), 2012 SECOND INTERNATIONAL CONFERENCE ON, IEEE, 13 October 2012 (2012-10-13), pages 432 - 439, XP032277305, ISBN: 978-1-4673-4470-8, DOI: 10.1109/3DIMPVT.2012.57
- SCHWARZ (NOKIA) S ET AL: "Nokia's response to CfP for Point Cloud Compression (Category 2)", no. m41779, 17 October 2017 (2017-10-17), XP030260370, Retrieved from the Internet <URL:http://phenix.int-evry.fr/mpeg/doc_end_user/documents/120_Macau/wg11/m41779-v2-m41779.zip m41779_PCC_Nokia_CfP_response.pdf> [retrieved on 20171017]
- THEOBALT, C. ET AL.: "Combining 3D flow fields with silhouette-based human motion capture for immersive video", GRAPHICAL MODELS, vol. 66, 12 September 2004 (2004-09-12), pages 333 - 351, XP004626855, Retrieved from the Internet <URL:https://www.sciencedirect.com/science/article/pii/S1524070304000499> [retrieved on 20190304]
- ZHANG, X. ET AL.: "Interactive Collision Detection for Deformable Models Using Streaming AABBs", IEEE TRANSACTIONS ON VISUALIZATION AND COMPUTER GRAPHICS, vol. 13, no. 2, 10 January 2007 (2007-01-10), pages 318 - 329, XP011157915, Retrieved from the Internet <URL:https://ieeexplore.ieee.org/document/4069240> [retrieved on 20190315]

## Description

### Technical Field

The present solution generally relates to virtual reality. In particular, the solution relates to encoding and decoding of volumetric video data.

### Background

Volumetric video data represents a three-dimensional scene or object and can be used as input for virtual reality (VR), augmented reality (AR) and mixed reality (MR) applications. Such data describes the geometry, e.g. shape, size, position in 3D-space, and respective attributes, e.g. color, opacity, reflectance and any possible temporal changes of the geometry and attributes at given time instances, comparable to frames in 2D video. Volumetric video is either generated from 3D models through computer-generated imagery (CGI), or captured from real-world scenes using a variety of capture solutions, e.g. multi-camera, laser scan, combination of video and dedicated depth sensors, and more. Also, a combination of CGI and real-world data is possible.

Representation formats for such volumetric data may consist of polygonal meshes, point clouds (PCs), or voxel arrays. Temporal information about the scene can be included in the form of individual capture instances, i.e. "frames" in 2D video, or other means, e.g. position of an object as a function of time.

WO 2015/172227 A1 (PCP VR INC [CA]) 19 November 2015 (2015-11-19) discloses a method of generating virtual reality multimedia at a developer computing device having a processor interconnected with a memory. The method comprises: capturing, at the processor, a point cloud representing a scene, the point cloud data including colour and depth data for each of a plurality of points corresponding to locations in the capture volume; generating, at the processor, a two-dimensional projection of a selected portion of the point cloud, the projection including the colour and depth data for the selected portion; and storing the two-dimensional projection in the memory.

### Summary

Now there has been invented a method and technical equipment implementing the method, for an improved coding of volumetric video. Various aspects of the invention include a method, an apparatus, and a computer readable medium comprising a computer program stored therein, which are characterized by what is stated in the independent claims. Various embodiments of the invention are disclosed in the dependent claims.

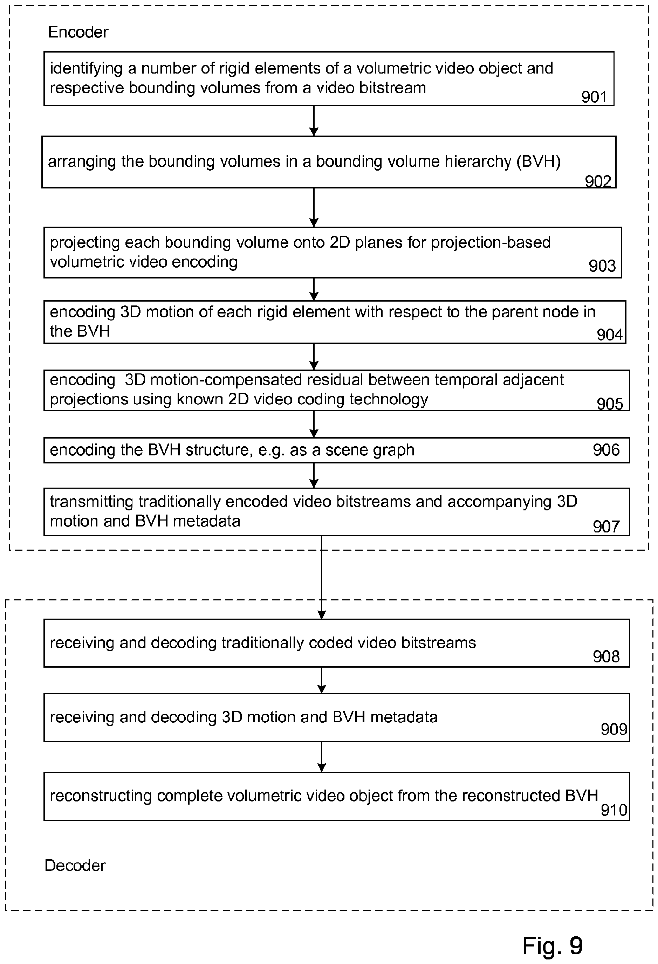

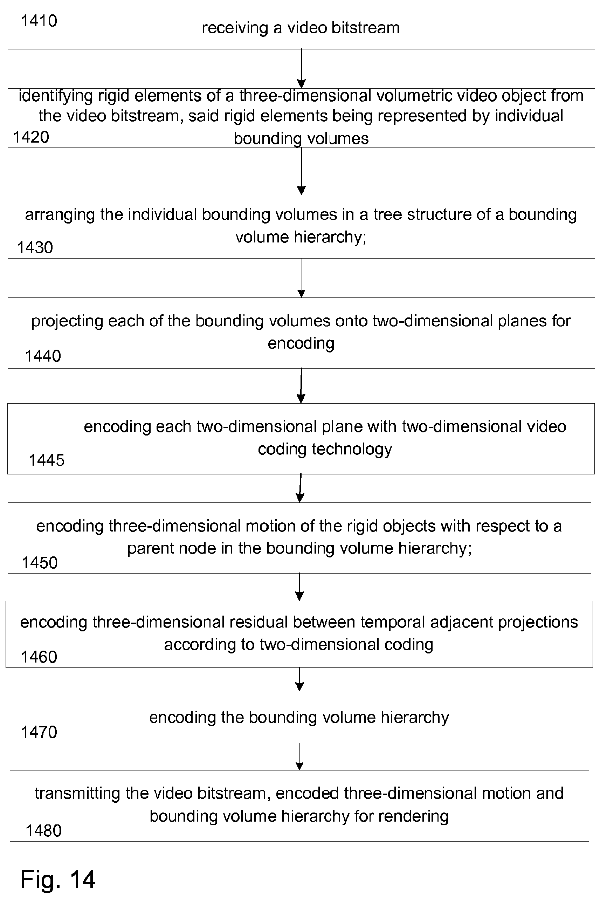

Enabling disclosure for the invention as defined in the claims is found in the embodiments described in relation with figures 9 and 14.

According to a first aspect, there is provided a method for encoding according to independent claim 1.

According to a third aspect, there is provided an apparatus according to independent claim 4.

According to a fourth aspect, there is provided a computer program product according to independent claim 6.

According to a fifth aspect, there is provided a method for decoding according to independent claim 3.

According to a seventh aspect, there is provided an apparatus for decoding according to independent claim 7.

### Description of the Drawings

In the following, various embodiments of the invention will be described in more detail with reference to the appended drawings, in which
- Fig. 1: shows a system for producing a three-dimensional scheme;
- Fig. 2a: shows a capture device according to an embodiment;
- Fig. 2b: shows a viewing device according to an embodiment;
- Figs. 3a-b: show an encoder and decoder for encoding and decoding pictures;
- Figs. 4a-d: show a setup for forming a stereo image of a scene to a user;
- Figs. 5a-b: illustrate bounding volumes according to an embodiment;
- Fig. 6: illustrates a classification of a human skeleton into several bodies;
- Fig. 7: illustrates an example of projection geometry subdivision;
- Figs. 8a-8b: show a concept of occlusion handling for projection-based volumetric video coding;
- Fig. 9: shows a method according to an embodiment;
- Fig. 10: shows a description of human skeleton and a scene graph of rigid objects;
- Fig. 11: shows an example of normal intersection angles of the same body at two different time instances;
- Fig. 12: shows an example of a bounding volume hierarchy representing a human body;
- Fig. 13: shows an example sequence for bounding volume hierarchy coding; and
- Fig. 14: is a flowchart illustrating a method according to an embodiment.

### Description of Example Embodiments

In the following, several embodiments of the invention will be described in the context of point cloud, voxel or mesh scene models for three-dimensional volumetric video and pixel and picture based two-dimensional video coding. It is to be noted, however, that the invention is not limited to specific scene models or specific coding technologies. In fact, the different embodiments have applications in any environment where coding of volumetric scene data is required.

One way to compress a time-varying volumetric scene/object is to project 3D (three-dimensional) surfaces on to some number of pre-defined 2D (two-dimensional) planes. Regular 2D video compression algorithms can then be used to compress various aspects of the projected surfaces. For e.g. a time-varying 3D point cloud, with spatial and texture coordinates, can be mapped into a sequence of at least two sets of planes, where one of the two sets carry the texture data and the other carries the distance of the mapped 3D surface points from the projection planes.

However, many volumetric scenes may comprise an arrangement of rigid objects (also referred to as bodies) moving with respect to each other. Identifying such rigid bodies and encoding their motion in 3D space will drastically improve the coding efficiency of the underlying 2D video coding technology, as temporal adjacent projections of a rigid body will have no or only a very small residual.

The present embodiments are targeted to such problem by introducing an improved method for coding of volumetric video.

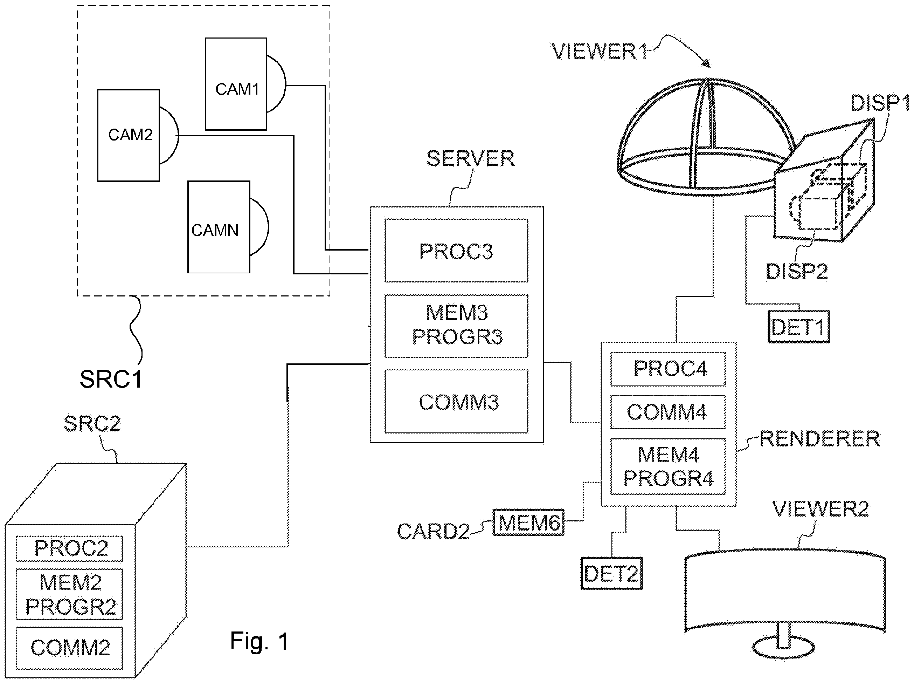

Fig. 1 shows a system for capturing, encoding, decoding, reconstructing and viewing a three-dimensional scheme, that is, for 3D video and 3D audio digital creation and playback. The task of the system is that of capturing sufficient visual and auditory information from a specific scene to be able to create a scene model such that a convincing reproduction of the experience, or presence, of being in that location can be achieved by one or more viewers physically located in different locations and optionally at a time later in the future. Such reproduction requires more information that can be captured by a single camera or microphone, in order that a viewer can determine the distance and location of objects within the scene using their eyes and their ears. To create a pair of images with disparity, at least two camera sources are needed. In a similar manner, for the human auditory system to be able to sense the direction of sound, at least two microphones are used (the commonly known stereo sound is created by recording two audio channels). The human auditory system can detect the cues, e.g. in timing difference of the audio signals to detect the direction of sound.

Volumetric video may be captured using more than one camera, wherein the more than one camera are components of a single capturing device, also referred to as a multicamera or a 3D camera, or wherein the more than one camera are separate devices operating together on a same scene. When multiple cameras are in use, the captured footage is synchronized so that the cameras provide different viewpoints to the same world. In contrast to traditional 2D/3D video, volumetric video describes a 3D model of the world where the viewer is free to move and observe different parts of the world.

The system of Fig. 1 may consist of three main parts: image sources, a server and a rendering device. A video source SRC1 may comprise multiple cameras CAM1, CAM2, ..., CAMN with overlapping field of view so that regions of the view around the video capture device is captured from at least two cameras. The video source SRC1 may comprise multiple microphones to capture the timing and phase differences of audio originating from different directions. The video source SRC1 may comprise a high resolution orientation sensor so that the orientation (direction of view) of the plurality of cameras CAM1, CAM2, ..., CAMN can be detected and recorded. The cameras or the computers may also comprise or be functionally connected to means for forming distance information corresponding to the captured images, for example so that the pixels have corresponding depth data. Such depth data may be formed by scanning the depth or it may be computed from the different images captured by the cameras. The video source SRC1 comprises or is functionally connected to, or each of the plurality of cameras CAM1, CAM2, ..., CAMN comprises or is functionally connected to a computer processor and memory, the memory comprising computer program code for controlling the source and/or the plurality of cameras. The image stream captured by the video source, i.e. the plurality of the cameras, may be stored on a memory device for use in another device, e.g. a viewer, and/or transmitted to a server using a communication interface. It needs to be understood that although a video source comprising three cameras is described here as part of the system, another amount of camera devices may be used instead as part of the system.

Alternatively or in addition to the source device SRC1 creating information for forming a scene model, one or more sources SRC2 of synthetic imagery may be present in the system, comprising a scene model. Such sources may be used to create and transmit the scene model and its development over time, e.g. instantaneous states of the model. The model can be created or provided by the source SRC1 and/or SRC2, or by the server SERVER. Such sources may also use the model of the scene to compute various video bitstreams for transmission.

The devices SRC1 and SRC2 may comprise or be functionally connected to a computer, processors (PROC2 shown) and memory (MEM2 shown), the memory comprising computer program (PROGR2 shown) code for controlling the source device SRC1/SRC2. The image stream captured by the device and the scene model may be stored on a memory device for use in another device, e.g. a viewer, or transmitted to a server or the viewer using a communication interface COMM2. There may be a storage, processing and data stream serving network in addition to the capture device SRC1. For example, there may be a server SERVER or a plurality of servers storing the output from the capture device SRC1 or device SRC2 and/or to form a scene model from the data from devices SRC1, SRC2. The device SERVER comprises or is functionally connected to a computer processor PROC3 and memory MEM3, the memory comprising computer program PROGR3 code for controlling the server. The device SERVER may be connected by a wired or wireless network connection, or both, to sources SRC1 and/or SRC2, as well as the viewer devices VIEWER1 and VIEWER2 over the communication interface COMM3.

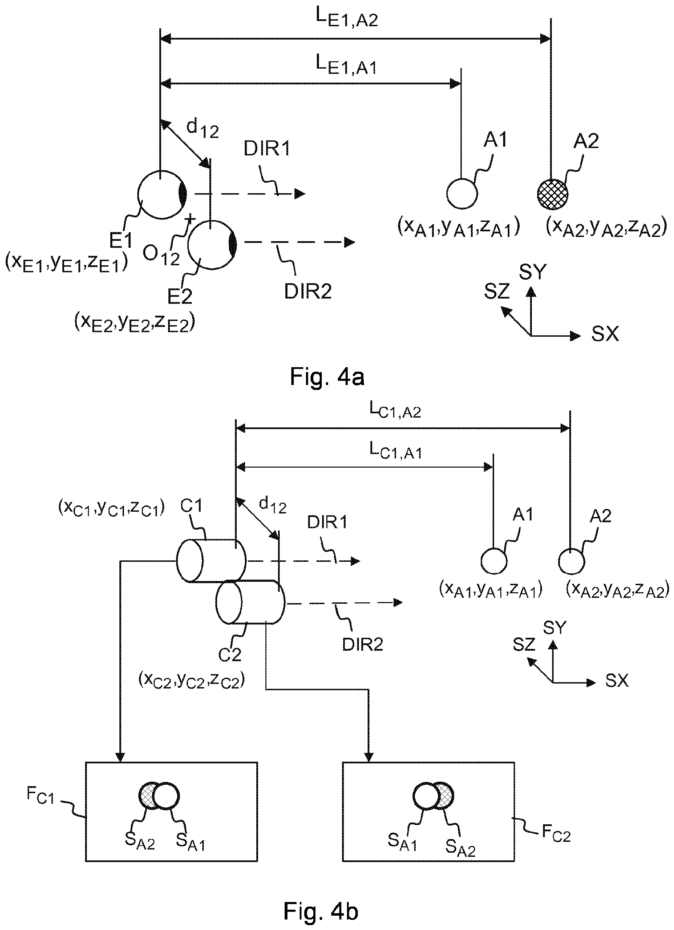

One or more 2D video bitstreams may be computed at the server SERVER or a device RENDERER used for rendering, or another device at the receiving end. When such computed video streams are used for viewing, the viewer may see a three-dimensional virtual world as described in the context of Figs 4a-4d. The creation of a 3D scene model may take place at the server SERVER or another device by using the images captured by the devices SRC1. The scene model may be a model created from captured image data (a real world model), or a synthetic model such as on device SRC2, or a combination of such. As described later, the scene model may be encoded to reduce its size and transmitted to a decoder, for example viewer devices.

For viewing the captured or created video content, there may be one or more viewer devices VIEWER1 and VIEWER2. These devices may have a rendering module and a display module, or these functionalities may be combined in a single device. The devices may comprise or be functionally connected to a computer processor PROC4 and memory MEM4, the memory comprising computer program PROG4 code for controlling the viewing devices. The viewer (playback) devices may consist of a data stream receiver for receiving a video data stream and for decoding the video data stream. The video data stream may be received from the server SERVER or from some other entity, such as a proxy server, an edge server of a content delivery network, or a file available locally in the viewer device. The data stream may be received over a network connection through communications interface COMM4, or from a memory device MEM6 like a memory card CARD2. The viewer devices may have a graphics processing unit for processing of the data to a suitable format for viewing. The viewer VIEWER1 may comprise a high-resolution stereo-image head-mounted display for viewing the rendered stereo video sequence. The head-mounted display may have an orientation sensor DET1 and stereo audio headphones. The viewer VIEWER2 may comprise a display (either two-dimensional or a display enabled with 3D technology for displaying stereo video), and the rendering device may have an orientation detector DET2 connected to it. Alternatively, the viewer VIEWER2 may comprise a 2D display, since the volumetric video rendering can be done in 2D by rendering the viewpoint from a single eye instead of a stereo eye pair.

It needs to be understood that Fig. 1 depicts one SRC1 device and one SRC2 device, but generally the system may comprise more than one SRC1 device and/or SRC2 device.

Any of the devices (SRC1, SRC2, SERVER, RENDERER, VIEWER1, VIEWER2) may be a computer or a portable computing device, or be connected to such. Moreover, even if the devices (SRC1, SRC2, SERVER, RENDERER, VIEWER1, VIEWER2) are depicted as a single device in Fig. 1, they may comprise multiple parts or may be comprised of multiple connected devices. For example, it needs to be understood that SERVER may comprise several devices, some of which may be used for editing the content produced by SRC1 and/or SRC2 devices, some others for compressing the edited content, and a third set of devices may be used for transmitting the compressed content. Such devices may have computer program code for carrying out methods according to various examples described in this text.

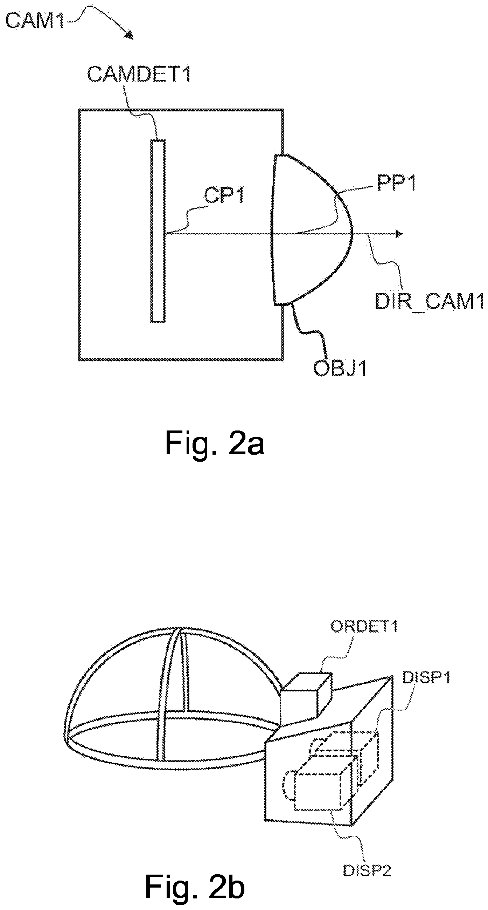

Figs. 2a and 2b show a capture device and a viewing device respectively.

Fig. 2a illustrates a camera CAM1. The camera can be one of the cameras of a 3D camera (a multicamera device)comprising several cameras with wide-angle lenses. The 3D camera may be suitable for creating stereo viewing image data and/or multiview video, comprising a plurality of video sequences for the plurality of cameras. The 3D camera may be such that any pair of cameras of at least two cameras has a parallax corresponding to parallax (disparity) of human eyes for creating a stereo image. At least two cameras may have overlapping fields of view such that an overlap region for which every part is captured by said at least two cameras is defined, and such overlap area can be used in forming the image for stereo viewing. The camera has a camera detector CAMDET1, comprising a plurality of sensor elements for sensing intensity of the light hitting the sensor element. The camera has a lens OBJ1 (or a lens arrangement of a plurality of lenses), the lens being positioned so that the light hitting the sensor elements travels through the lens to the sensor elements. The camera detector CAMDET1 has a nominal center point CP1 that is a middle point of the plurality of sensor elements, for example for a rectangular sensor the crossing point of the diagonals. The lens has a nominal center point PP1, as well, lying for example on the axis of symmetry of the lens. The direction of orientation of the camera is defined by the line passing through the center point CP1 of the camera sensor and the center point PP1 of the lens. The direction of the camera is a vector along this line pointing in the direction from the camera sensor to the lens. The optical axis of the camera is understood to be this line CP1-PP1.

Fig. 2b shows a viewing apparatus in the form of a head-mounted display (HMD). The head-mounted display comprises two screen sections or two screens DISP1 and DISP2 for displaying the left and right eye images. The displays are close to the eyes, and therefore lenses are used to make the images easily viewable and for spreading the images to cover as much as possible of the eyes' field of view. The device is attached to the head of the user so that it stays in place even when the user turns his head. The device may have an orientation detecting module ORDET1 for determining the head movements and direction of the head. The head-mounted display gives a three-dimensional perception of the recorded/streamed content to a user.

The system described above may function as follows. Time-synchronized video and orientation data is first recorded with the capture devices. This can consist of multiple concurrent video streams as described above. One or more time-synchronized audio streams may also be recorded with the capture devices. The different capture devices may form image and geometry information of the scene from different directions. For example, there may be three, four, five, six or more cameras capturing the scene from different sides, like front, back, left and right, and/or at directions between these, as well as from the top or bottom, or any combination of these. The cameras may be at different distances, for example some of the cameras may capture the whole scene and some of the cameras may be capturing one or more objects in the scene. In an arrangement used for capturing volumetric video data, several cameras may be directed towards an object, looking onto the object from different directions, where the object is e.g. in the middle of the cameras. In this manner, the texture and geometry of the scene and the objects within the scene may be captured adequately. As mentioned earlier, the cameras or the system may comprise means for determining geometry information, e.g. depth data, related to the captured video streams. From these concurrent video and audio streams, a computer model of a scene may be created. Alternatively or additionally, a synthetic computer model of a virtual scene may be used. The models (at successive time instances) are then transmitted immediately or later to the storage and processing network for processing and conversion into a format suitable for subsequent delivery to playback devices. The conversion may involve processing and coding to improve the quality and/or reduce the quantity of the scene model data while preserving the quality at a desired level. Each playback device receives a stream of the data (either computed video data or scene model data) from the network, and renders it into a viewing reproduction of the original location which can be experienced by a user. The reproduction may be two-dimensional or three-dimensional (stereo image pairs).

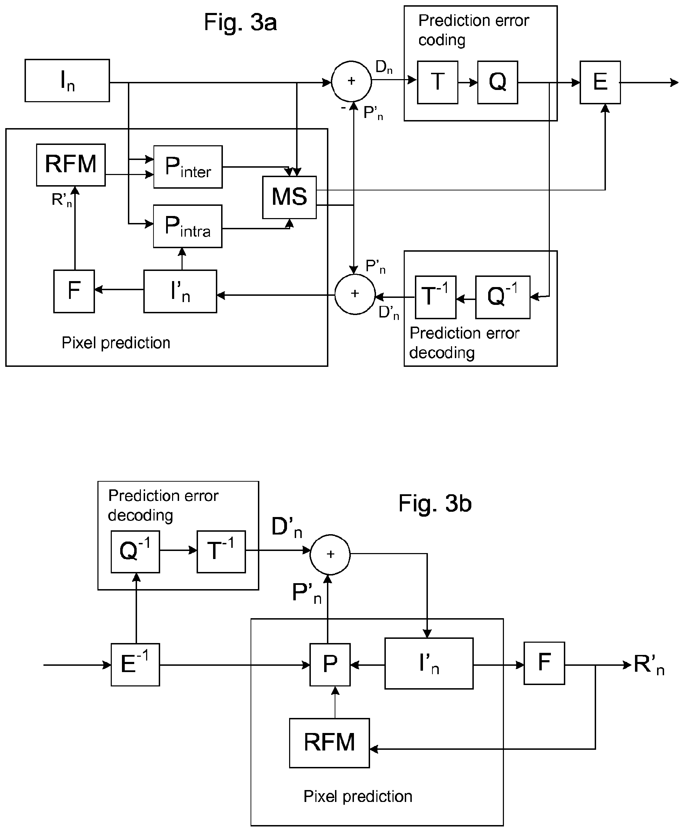

A video codec comprises an encoder and a decoder for encoding and decoding texture pictures, geometry pictures and/or auxiliary pictures. The encoder is configured to transform an input video into a compressed representation suited for storage/transmission and the decoder is configured to uncompress the compressed video representation back into a viewable form. The encoder may discard and/or lose some information in the original video sequence in order to represent the video in a more compact form (that is, at lower bitrate). An example of an encoding process is illustrated in Figure 3a. Figure 3a illustrates an image to be encoded (Iⁿ); a predicted representation of an image block (P'"); a prediction error signal (D"); a reconstructed prediction error signal (D'ⁿ); a preliminary reconstructed image (I'ⁿ); a final reconstructed image (R'ⁿ); a transform (T) and inverse transform (T⁻¹); a quantization (Q) and inverse quantization (Q⁻¹ ); entropy encoding (E); a reference frame memory (RFM); inter prediction (P^{inter}); intra prediction (P^{intra}); mode selection (MS) and filtering (F).

An example of a decoding process is illustrated in Figure 3b. Figure 3b illustrates a predicted representation of an image block (P'"); a reconstructed prediction error signal (D'ⁿ); a preliminary reconstructed image (I'ⁿ); a final reconstructed image (R'ⁿ); an inverse transform (T⁻¹); an inverse quantization (Q⁻¹); an entropy decoding (E⁻¹); a reference frame memory (RFM); a prediction (either inter or intra) (P); and filtering (F).

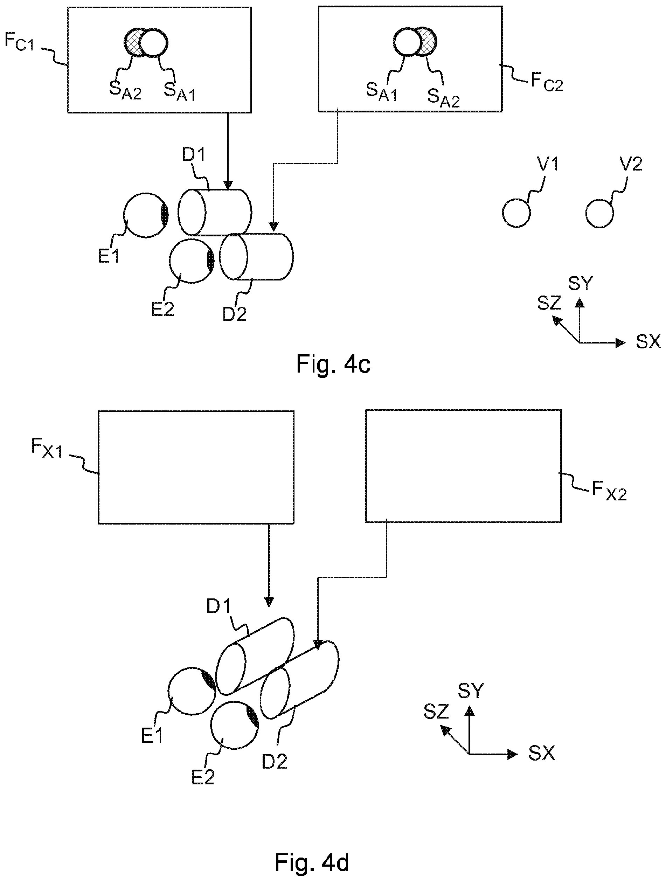

Figs. 4a, 4b, 4c and 4d show a setup for forming a stereo image of a scene to a user, for example a video frame of a 3D video. In Fig. 4a, a situation is shown where a human being is viewing two spheres A1 and A2 using both eyes E1 and E2. The sphere A1 is closer to the viewer than the sphere A2, the respective distances to the first eye E1 being L_{E1,A1} and L_{E1,A2}. The different objects reside in space at their respective (x,y,z) coordinates, defined by the coordinate system SZ, SY and SZ. The distance d₁₂ between the eyes of a human being may be approximately 62-64 mm on average, and varying from person to person between 55 and 74 mm. This distance is referred to as the parallax, on which stereoscopic view of the human vision is based on. The viewing directions (optical axes) DIR1 and DIR2 are typically essentially parallel, possibly having a small deviation from being parallel, and define the field of view for the eyes. The head of the user has an orientation (head orientation) in relation to the surroundings, most easily defined by the common direction of the eyes when the eyes are looking straight ahead. That is, the head orientation tells the yaw, pitch and roll of the head in respect of a coordinate system of the scene where the user is.

When the viewer's body (thorax) is not moving, the viewer's head orientation is restricted by the normal anatomical ranges of movement of the cervical spine.

In the setup of Fig. 4a, the spheres A1 and A2 are in the field of view of both eyes. The center-point O₁₂ between the eyes and the spheres are on the same line. That is, from the center-point, the sphere A2 is behind the sphere A1. However, each eye sees part of sphere A2 from behind A1, because the spheres are not on the same line of view from either of the eyes.

In Fig. 4b, there is a setup shown, where the eyes have been replaced by cameras C1 and C2, positioned at the location where the eyes were in Fig. 4a. The distances and directions of the setup are otherwise the same. Naturally, the purpose of the setup of Fig. 4b is to be able to take a stereo image of the spheres A1 and A2. The two images resulting from image capture are F_{C1} and F_{C2}. The "left eye" image F_{C1} shows the image S_{A2} of the sphere A2 partly visible on the left side of the image S_{A1} of the sphere A1. The "right eye" image F_{C2} shows the image S_{A2} of the sphere A2 partly visible on the right side of the image S_{A1} of the sphere A1. This difference between the right and left images is called disparity, and this disparity, being the basic mechanism with which the human visual system (HVS) determines depth information and creates a 3D view of the scene, can be used to create an illusion of a 3D image.

In this setup of Fig. 4b, where the inter-eye distances correspond to those of the eyes in Fig. 4a, the camera pair C1 and C2 has a natural parallax, that is, it has the property of creating natural disparity in the two images of the cameras. Natural disparity may be understood to be created even though the distance between the two cameras forming the stereo camera pair is somewhat smaller or larger than the normal distance (parallax) between the human eyes, e.g. essentially between 40 mm and 100 mm or even 30 mm and 120 mm.

It needs to be understood here that the images F_{C1} and F_{C2} may be captured by cameras C1 and C2, where the cameras C1 and C2 may be real-world cameras or they may be virtual cameras. In the case of virtual cameras, the images F_{C1} and F_{C2} may be computed from a computer model of a scene by setting the direction, orientation and viewport of the cameras C1 and C2 appropriately such that a stereo image pair suitable for viewing by the human visual system (HVS) is created.

In Fig. 4c, the creating of this 3D illusion is shown. The images F_{C1} and F_{C2} captured or computed by the cameras C1 and C2 are displayed to the eyes E1 and E2, using displays D1 and D2, respectively. The disparity between the images is processed by the HVS so that an understanding of depth is created. That is, when the left eye sees the image S_{A2} of the sphere A2 on the left side of the image S_{A1} of sphere A1, and respectively the right eye sees the image of A2 on the right side, the HVS creates an understanding that there is a sphere V2 behind the sphere V1 in a three-dimensional world. Here, it needs to be understood that the images F_{C1} and F_{C2} can also be synthetic, that is, created by a computer. If they carry the disparity information, synthetic images will also be seen as three-dimensional by the HVS. That is, a pair of computer-generated images can be formed so that they can be used as a stereo image.

Fig. 4d illustrates how the principle of displaying stereo images to the eyes can be used to create 3D movies or virtual reality scenes having an illusion of being three-dimensional. The images F_{X1} and F_{X2} are either captured with a stereo camera or computed from a model so that the images have the appropriate disparity. By displaying a large number (e.g. 30) frames per second to both eyes using display D1 and D2 so that the images between the left and the right eye have disparity, the HVS will create a cognition of a moving, three-dimensional image.

The field of view represented by the content may be greater than the displayed field of view e.g. in an arrangement depicted in Fig. 4d. Consequently, only a part of the content along the direction of view (a.k.a. viewing orientation) is displayed at a single time. This direction of view, that is, the head orientation, may be determined as a real orientation of the head e.g. by an orientation detector mounted on the head, or as a virtual orientation determined by a control device such as a joystick or mouse that can be used to manipulate the direction of view without the user actually moving his head. That is, the term "head orientation" may be used to refer to the actual, physical orientation of the user's head and changes in the same, or it may be used to refer to the virtual direction of the user's view that is determined by a computer program or a computer input device.

The content may enable viewing from several viewing positions within the 3D space. The texture picture(s), the geometry picture(s) and the geometry information may be used to synthesize the images F_{X1} and/or F_{X2} as if the displayed content was captured by camera(s) located at the viewing position.

The principle illustrated in Figs. 4a-4d may be used to create three-dimensional images to a viewer from a three-dimensional scene model (volumetric video) after the scene model has been encoded at the sender and decoded and reconstructed at the receiver. Because volumetric video describes a 3D scene or object at different (successive) time instances, such data can be viewed from any viewpoint. Therefore, volumetric video is an important format for any augmented reality, virtual reality and mixed reality applications, especially for providing viewing capabilities having six degrees of freedom (so-called 6DOF viewing).

Increasing computational resources and advances in 3D data acquisition devices has enabled reconstruction of highly detailed volumetric video representations of natural scenes. Infrared, lasers, time-of-flight and structured light are all examples of devices that can be used to construct 3D video data. Representation of the 3D data depends on how the 3D data is used. Dense Voxel arrays have been used to represent volumetric medical data. In 3D graphics, polygonal meshes are extensively used. Point clouds on the other hand are well suited for applications such as capturing real world 3D scenes where the topology is not necessarily a 2D manifold. Another way to represent 3D data is coding this 3D data as a set of texture and depth map as is the case in the multi-view plus depth. Closely related to the techniques used in multi-view plus depth is the use of elevation maps, and multi-level surface maps.

In dense point clouds or voxel arrays, the reconstructed 3D scene may contain tens or even hundreds of millions of points. If such representations are to be stored or interchanged between entities, then efficient compression is needed. Standard volumetric video representation formats, such as point clouds, meshes, voxel, suffer from poor temporal compressions performance. Identifying correspondences for motion-compensation in 3D space is an ill-defined problem, as both, geometry and respective attributes may change. For example, temporal successive "frames" do not necessarily have the same number of meshes, points or voxel. Therefore, compression of dynamic 3D scenes is inefficient. 2D video based approaches for compressing volumetric data, i.e. multiview and depth, have better compression efficiency, but rarely cover the full scene. Therefore, they provide only limited 6DOF capabilities.

Instead of the above-mentioned approach, a 3D scene, represented as meshes, points, and/or voxel can be projected onto one, or more 2D planes or simple geometries. Such geometries can then be "unfolded" onto 2D planes. There may be at least two planes per projection: one for texture, one for depth, and more if there are other attributes to be coded, which are then encoded using standard 2D video compression technologies. Relevant projection geometry information is transmitted alongside the encoded video files to the decoder. The decoder decodes the video and performs the inverse projection to regenerate the 3D scene in any desired representation format (not necessarily the starting format). Projecting volumetric models onto 2D planes allows for using standard 2D video coding tools with highly efficient temporal compression. Thus, coding efficiency is increased greatly. Using geometry-projections instead of prior-art 2D-video based approaches, i.e. multiview and depth, provide a better coverage of the scene (or object). Thus, 6DOF capabilities are improved. Using several geometries for individual objects improves the coverage of the scene further. Furthermore, standard video encoding hardware can be utilized for real-time compression/decompression of the projected planes. The projection and reverse projection steps are of low complexity.

A bounding volume is a closed volume containing an object. The bounding volume can have a different shape, e.g. in 3D the volume can be a cuboid, a sphere, a cylinder, etc. and in 2D the volume can be a rectangle, a circle, a triangle etc. Sometimes the bounding volume is called as a bounding box.

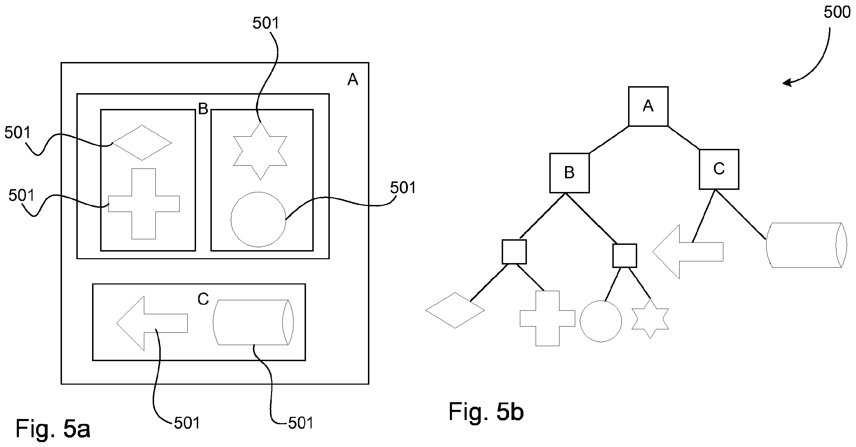

A bounding volume hierarchy (BVH), on the other hand, is a tree structure on a set of geometric objects. An example of a BVH 500 is shown in Figure 5b, wherein the BVH comprises objects 501 of Figure 5a. All geometric objects 501 (Fig. 5a) are wrapped in bounding volumes that form leaf nodes of the tree (Fig. 5b). These nodes are then grouped as small sets and enclosed with larger bounding volumes. These, in turn, are also grouped and enclosed within other larger bounding volumes in a recursive fashion resulting in a tree structure with a single bounding volume at the top of the tree.

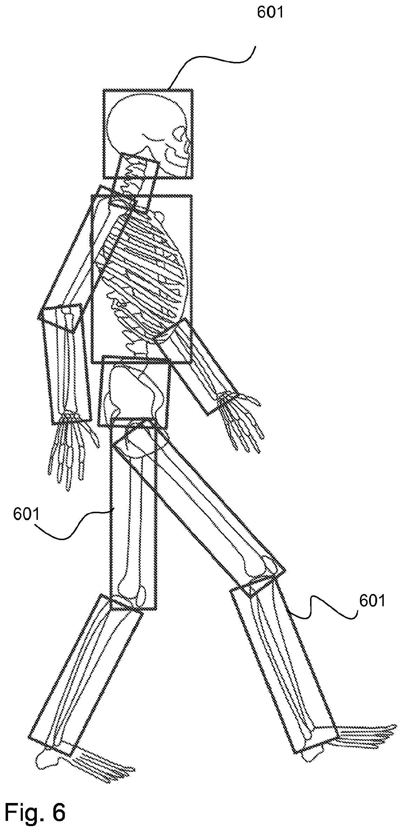

A rigid object (a.k.a. a rigid body) is a solid object in which deformation is zero or so small it can be neglected. Figure 6 illustrates a classification of a human skeleton into several rigid objects (marked with squares 601). The distance between any two given points on a rigid object remains constant in time regardless of external forces exerted on it. A rigid object is usually considered as a continuous distribution of mass.

When rigid objects move in respect to each other in a volumetric scene, the identification of such rigid object and encoding of their dependent motion in 3D space is considered highly beneficial for the coding technology.

For example, a volumetric video can be compresses as point cloud, e.g. as in MPEG PCC (Point Cloud Compression) experimental software, or meshes, e.g. FAMC - MPEG-4 standard for Animated Mesh Compression. Both 3D representations are inferior to a projection based compression approach due to their lack of motion estimation in 3D domain, a highly complex task to achieve.

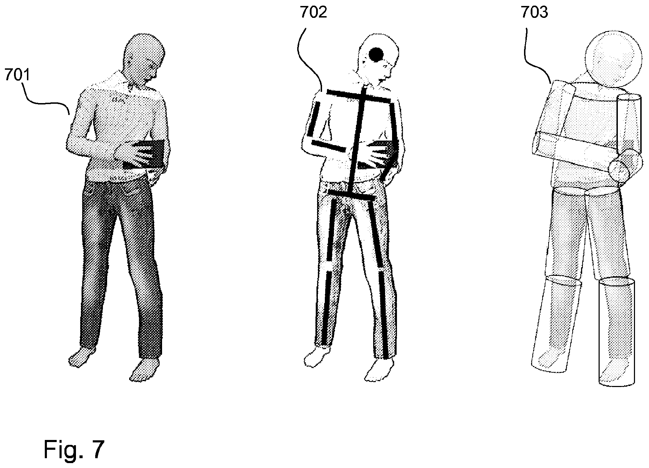

As an another example, a volumetric video data can be compressed based on projection. An example of a projection is a skeletal projection, where a skeletal volumetric video object is represented by several projection geometries. A skeletal volumetric video object is a volumetric video object (point cloud, meshes, voxels) that can be approximated by an underlying skeleton model. Such models can either be predefined or derived from the original object by prior-art analysis tools. Projection geometry subdivision and parameters are then derived from this skeletal model. Figure 7 illustrates such a projection approach for 3D object sub-vision based on skeletal model. An original 3D object is referred to with a reference number 701, whereas the a skeleton model is referred to with a reference number 702, and derived geometry sub-division with a reference number 703.

For the described example, the signaling could be as follows:

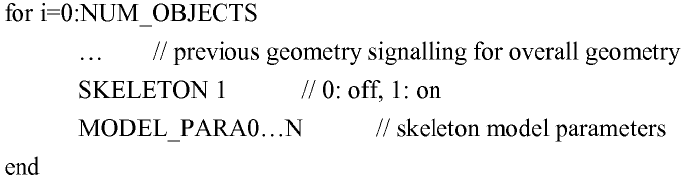

In this kind of projection embodiment, different parts of the same object are presented with different cylinders, as shown with reference 703. Similar approach can be used for any other type of other objects which follow a general structural skeleton, e.g. an animal, a bird, an airplane, a room with furniture, etc.

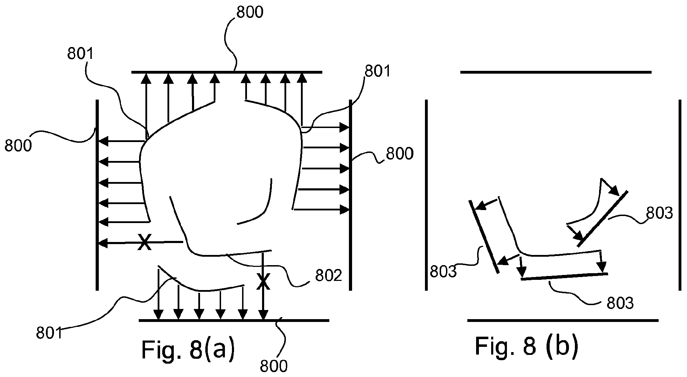

This projection embodiment has been further developed for occlusion handling, where the 3D volume surface is analyzed with respect to the target projection surface before performing the 3D->2D projection. This can be implemented as follows: An entity that maps 3D texture data on to projection planes can choose the six sides of an oriented or an axis aligned bounding box of a 3D point cloud as the initial set of projection planes. The mapping of 3D surface parts on to the projection planes only maps the closest coherent surface onto the projections planes. For example, if there are two surfaces of the 3D object where one surface occludes the other surface in the direction of the 2D planes normal, then only the occluding surface is mapped on to the projection plane. The occluded surface requires the generation of another projection plane for mapping. The pose of the projection planes for the occluded points in the point cloud can be chosen such that it maximizes the rate-distortion performance for encoding the texture, depth and other auxiliary planes. The concept is illustrated in Figure 8. Figure 8a shows a cross-section of a 3D object's surface enclosed in a bounding box as viewed from the top of the bounding box. Figure 8a shows how the un-occluded surfaces 801 of the 3D object is mapped to the four sides 800 of the bounding box, while the occluded surfaces 802 are not. Figure 8b shows a new projection poses that are established to project the previously occluded surfaces of the 3D object. Note that in Figure 8b, the pose of chosen projection planes 803 is independent of other chosen projection planes, and are chosen such that they are sufficient enough to cover the surface that is to be projected.

As an improved solution for identifying rigid elements of an object and for encoding of their motion in 3D space, the following method is presented (it is to be noticed that this is one of the possible embodiments, and should not be considered limiting). The method according to this embodiment is illustrated in Figure 9 and it comprises:
- identifying 901 a number of rigid elements of a volumetric video object and respective bounding volumes;
- arranging 902 the bounding volumes in a bounding volume hierarchy (BVH);
- projecting 903 each bounding volume onto 2D planes for projection-based volumetric video encoding;
- encoding 904 3D motion of each rigid element with respect to the parent node in the BVH;
- encoding 905 3D motion-compensated residual between temporal adjacent projections using known 2D video coding technology;
- encoding 906 the BVH structure, e.g. as a scene graph;
- transmitting 907 video bitstreams and accompanying 3D motion and BVH metadata;
- receiving and decoding 908 video bitstreams;
- receiving and decoding 909 3D motion and BVH metadata; and
- reconstructing 910 complete volumetric video object from the reconstructed BVH.

Different parts of the method can be implemented in different parts of the system (for example a system of Figure 1). For example, steps before transmission can be implemented in the image sources and/or the server, whereas the steps after the transmission can be implemented in the viewer devices and/or renderer.

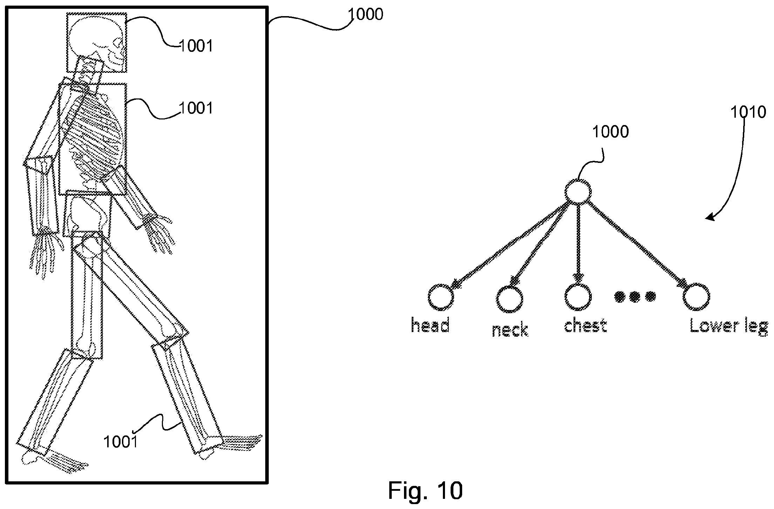

Before identifying rigid elements, a scene graph may be used at first to position (i.e. to locate) an object. An object spatial positioning graph records the location and orientation of bounding volumes of the objects based relative to the root bounding volume. The root bounding volume encapsulate all sub-bounding volumes. A BVH tree can be used to describe the object spatial positioning. Figure 10 illustrates a description of a human skeleton (i.e. an object) with rigid body bounding volumes 1001 (of rigid elements) and root bounding volume 1000, and the resulting scene graph 1001 of the rigid elements related to said root bounding volume 1000.

For identifying rigid elements (step 901 of Figure 9) adjacent time frame volumes may be used as follows:
- Point-normal's or surface-normal's orientations may be used to identify which points in a point cloud (or which vertices in a mesh) belong to the same rigid element.
- Intersection angles between normals (either surface or point) within a rigid element do not change (beyond a small threshold due to variances in normal estimation).
- By observing n adjacent 3D points in time and analyzing their normal intersection angles, it is possible to identify points/surfaces that move coherently across volume frames.
- Coherently moving partial volumes are segmented as independent rigid elements (bodies) with their own independent bounding box.

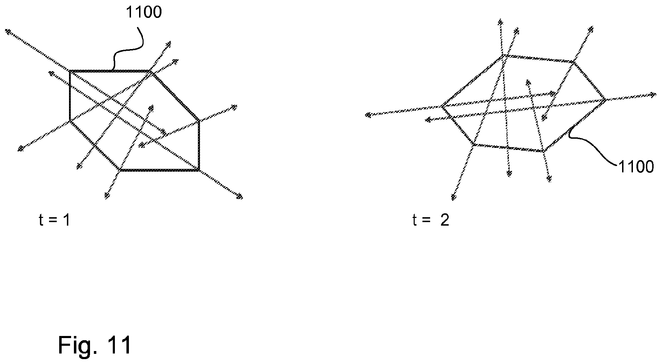

Figure 11 shows an example of surface normal (arrows) intersection angles of the same rigid object 1100 at two different time instances t = 1, t =2.

An embodiment of a method for encoding, where a 3D volumetric video object is coded as bounding volume hierarchy, comprises
- Separating a 3D volumetric video object into rigid elements represented as individual bounding volumes (see Fig. 10). Texture and geometry of each bounding volume is projected onto 2D planes, by using e.g. skeletal projection discussed earlier. (Fig. 9; 901, 902, 903)
- 3D motion of each rigid object in 3D space may be represented as rotation (e.g. quaternion, rotation matrix) and translation (3D vector).
- Each rotation and translation encodes the delta 3D movement of the rigid objects with respect to the next hierarchical higher node in the BVH. (Fig. 9, 904)
- The relation between the individual bounding volumes may be represented as bounding volume hierarchy (see Fig. 5b) and encoded, for example as a scene graph representation (Fig. 9; 906).
- Any residuals between temporal adjacent projections (e.g. between temporal adjacent texture or geometry planes) (due to variances over time) are coded as using traditional 2D video coding technology. If the 3D data within a bounding volume is truly rigid, then the texture and geometry will not vary too much across time. (Fig. 9; 905)

An embodiment of a method for decoding, where a 3D volumetric video object is decoded from bounding volume hierarchy, comprises
- receiving and decoding video bit streams (Fig. 9; 908);
- receiving and decoding 3D motion and BVH metadata (Fig. 9; 909); and
- reconstructing complete volumetric video object from the decoded BVH (Fig. 9; 910), wherein the BVH represents bounding volumes of rigid elements in a volumetric video object.

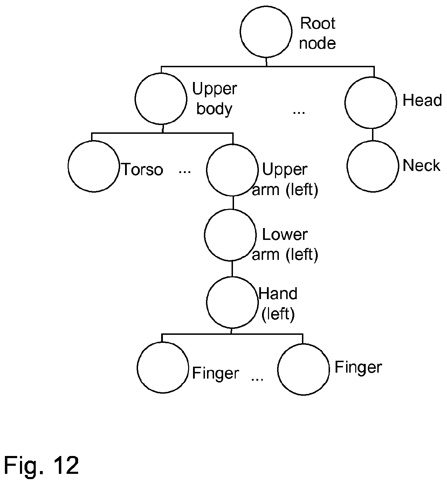

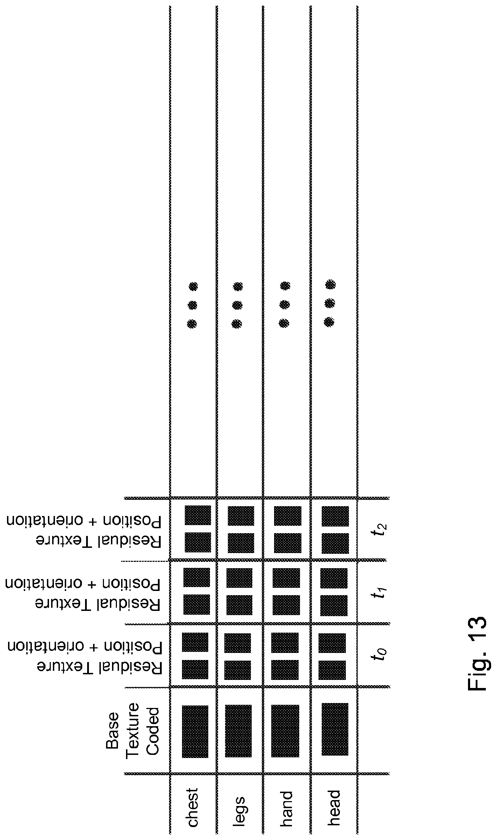

Figure 12 illustrates an example for a bounding volume hierarchy representing a human body. Figure 13 illustrates an example sequence and metadata pattern for bounding volume hierarchy coding.

Figure 14 is a flowchart illustrating a method for encoding according to an embodiment. A method comprises receiving 1410 a volumetric video; identifying 1420 rigid elements of a three-dimensional volumetric video object from the volumetric video, said rigid elements being represented by individual bounding volumes; arranging 1430 the individual bounding volumes in a tree structure of a bounding volume hierarchy; projecting 1440 each of the bounding volumes onto two-dimensional planes for encoding; encoding 1445 each two-dimensional plane with two-dimensional video coding technology; encoding 1450 three-dimensional motion of the rigid objects with respect to a parent node in the bounding volume hierarchy; encoding 1460 three-dimensional residual between temporal adjacent projections according to two-dimensional coding; encoding 1470 the bounding volume hierarchy; and transmitting 1480 the video bitstream, encoded three-dimensional motion and bounding volume hierarchy for rendering.

An apparatus according to an embodiment comprises means for receiving a volumetric video; means for identifying rigid elements of a three-dimensional volumetric video object from the volumetric video, said rigid elements being represented by individual bounding volumes; means for arranging the individual bounding volumes in a tree structure of a bounding volume hierarchy; means for projecting each of the bounding volumes onto two-dimensional planes for encoding; means for encoding three-dimensional motion of the rigid objects with respect to a parent node in the bounding volume hierarchy; means for encoding each two-dimensional plane with two-dimensional video coding technology; means for encoding three-dimensional residual between temporal adjacent projections according to two-dimensional coding; means for encoding the bounding volume hierarchy; and means for transmitting the video bitstream, encoded three-dimensional motion and bounding volume hierarchy for rendering. These means comprises at least one processor, and a memory including computer program code. The memory and the computer program code are configured to, with the at least one processor, cause the apparatus to perform at least the method of Fig. 14.

The computer program code comprises one or more operational characteristics. Said operational characteristics are being defined through configuration by said computer based on the type of said processor, wherein a system is connectable to said processor by a bus, wherein a programmable operational characteristic of the system comprises receiving a volumetric video; identifying rigid elements of a three-dimensional volumetric video object from the volumetric video, said rigid elements being represented by individual bounding volumes; arranging the individual bounding volumes in a tree structure of a bounding volume hierarchy; projecting each of the bounding volumes onto two-dimensional planes for encoding; encoding each two-dimensional plane with two-dimensional video coding technology; encoding three-dimensional motion of the rigid objects with respect to a parent node in the bounding volume hierarchy; encoding three-dimensional residual between temporal adjacent projections according to two-dimensional coding; encoding the bounding volume hierarchy; and transmitting the video bitstream, encoded three-dimensional motion and bounding volume hierarchy for rendering.

The method for decoding according to an embodiment comprises receiving encoded video bitstreams; decoding the received video bitstreams; receiving three-dimensional motion and bounding volume hierarchy metadata; decoding three-dimensional motion and bounding volume hierarchy metadata; and reconstructing the volumetric video from the decoded bounding volume hierarchy, wherein the wherein the bounding volume hierarchy represents bounding volumes of rigid elements in a volumetric video object.

The apparatus according to an embodiment comprises means for receiving encoded video bitstreams; means for decoding the received video bitstreams; means for receiving three-dimensional motion and bounding volume hierarchy metadata; means for decoding three-dimensional motion and bounding volume hierarchy metadata; and means for reconstructing the volumetric video from the decoded bounding volume hierarchy, wherein the wherein the bounding volume hierarchy represents bounding volumes of rigid elements in a volumetric video object. These means comprises at least one processor, and a memory including computer program code. The memory and the computer program code are configured to, with the at least one processor, cause the apparatus to perform the method for decoding.

The computer program code comprises one or more operational characteristics. Said operational characteristics are being defined through configuration by said computer based on the type of said processor, wherein a system is connectable to said processor by a bus, wherein a programmable operational characteristic of the system comprises receiving encoded video bitstreams; decoding the received video bitstreams; receiving three-dimensional motion and bounding volume hierarchy metadata; decoding three-dimensional motion and bounding volume hierarchy metadata; and reconstructing the volumetric video from the decoded bounding volume hierarchy, wherein the wherein the bounding volume hierarchy represents bounding volumes of rigid elements in a volumetric video object.

The various embodiments may provide advantages. For example, identifying rigid elemets and encoding parametric encoding of their motion in 3D space reduces the load on the 2D video coding part of projection-based volumetric video coding. Thus, increased encoding performance can be achieved.

In addition, encoding rigid object motion as deltas within a bounding volume hierarchy decreases the amount of required motion information to a smaller residual. Thus, increased encoding performance can be achieved.

All the benefits of projection-based volumetric video coding, i.e. use of existing 2D video coding hardware and infrastructure remain. The bounding volume hierarchy and the bounding volume motion can be transmitted as external metadata. The load of such metadata is rather low (hierarchy remains static, hierarchical residual for motion data).

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims.

It is also noted herein that while the above describes example embodiments, these descriptions should not be viewed in a limiting sense. Rather, there are several variations and modifications, which may be made.

## Claims

1. A method for encoding, comprising:
- receiving a volumetric video;
- identifying rigid elements of a three-dimensional volumetric video object from the volumetric video, said rigid elements being represented by separate bounding volumes;
- arranging the separate bounding volumes in a tree structure of a bounding volume hierarchy;
- projecting texture and geometry of each of the separate bounding volumes onto corresponding two-dimensional planes for encoding:
- encoding each two-dimensional plane with two-dimensional video coding into a bitstream;
- encoding three-dimensional motion being represented as rotation and translation of the rigid elements by encoding delta three-dimensional movement of the rigid elements with respect to a parent node in the bounding volume hierarchy;
- if there is a residual between temporally adjacent texture or geometry planes, encoding the residual according to two-dimensional video coding into a bitstream;
- encoding the bounding volume hierarchy; and
- transmitting the encoded bitstreams and the encoded three-dimensional motion and bounding volume hierarchy for rendering

2. The method according to claim 1, further comprising positioning the three-dimensional volumetric video object by means of a scene graph.

3. A method for decoding, comprising
- receiving encoded video bitstreams and encoded three-dimensional motion and bounding volume hierarchy;
- decoding from encoded bounding volume hierarchy, a bounding volume hierarchy;
- decoding from encoded three-dimensional motion, three-dimensional motion being represented as rotation and translation of rigid elements by decoding delta three-dimensional movement of the rigid elements with respect to a parent node in the bounding volume hierarchy;
- decoding from the received video bitstreams, a residual. if any, said residual being between temporally adjacent texture or geometry planes;
- decoding from the received video bitstreams with two-dimensional video decoding, two-dimensional planes;
- determining texture and geometry of each of separate bounding volumes from the decoded two-dimensional planes;
- determining separate bounding volumes from a tree structure of a bounding volume hierarchy;
- reconstructing rigid elements of a three-dimensional volumetric video object from the separate bounding volumes; and
- reconstructing a volumetric video from the decoded bounding volume hierarchy, three-dimensional motion and the rigid elements..

4. An apparatus for encoding, comprising:
- means for receiving a volumetric video;
- means for identifying rigid elements of a three-dimensional volumetric video object from the volumetric video, said rigid elements being represented by separate bounding volumes;
- means for arranging the separate bounding volumes in a tree structure of a bounding volume hierarchy;
- means for projecting texture and geometry of each of the separate bounding volumes onto corresponding two-dimensional planes for encoding:
- means for encoding each two-dimensional plane with two-dimensional video coding into a bitstream;
- means for encoding three-dimensional motion being represented as rotation and translation of the rigid elements by encoding delta three-dimensional movement of the rigid elements with respect to a parent node in the bounding volume hierarchy;
- if there is a residual between temporally adjacent texture or geometry planes, means for encoding the residual according to two-dimensional video coding into a bitstream;
- means for encoding the bounding volume hierarchy; and
- means for transmitting the encoded bitstreams and the encoded three-dimensional motion and bounding volume hierarchy for rendering

5. The apparatus according to claim 4, further comprising means for positioning the three-dimensional volumetric video object by means of a scene graph.

6. A computer program product embodied on a non-transitory computer readable medium, comprising computer program code configured to, when executed on at least one processor, cause an apparatus or a system to:
- receive a volumetric video;
- identify rigid elements of a three-dimensional volumetric video object from the volumetric video, said rigid elements being represented by separate bounding volumes;
- arrange the separate bounding volumes in a tree structure of a bounding volume hierarchy;
- project texture and geometry of each of the separate bounding volumes onto corresponding two-dimensional planes for encoding:
- encoding each two-dimensional plane with two-dimensional video coding into a bitstream;
- encode three-dimensional motion being represented as rotation and translation of the rigid elements by encoding delta three-dimensional movement of the rigid elements with respect to a parent node in the bounding volume hierarchy;
- if there is a residual between temporally adjacent texture or geometry planes , encoding the residual according to two-dimensional video coding;
- encode the bounding volume hierarchy; and
- transmit the encoded bitstreams and the encoded three-dimensional motion and bounding volume hierarchy for rendering.

7. An apparatus for decoding, comprising:
- means for receiving encoded video bitstreams and encoded three-dimensional motion and bounding volume hierarchy;
- means for decoding from encoded bounding volume hierarchy, a bounding volume hierarchy;
- means for decoding from encoded three-dimensional motion, three-dimensional motion being represented as rotation and translation of rigid elements by decoding delta three-dimensional movement of the rigid elements with respect to a parent node in the bounding volume hierarchy;
- means for decoding from the received video bitstreams, a residual, if any, said residual being between temporally adjacent texture or geometry planes;
- means for decoding from the received video bitstreams with two-dimensional video decoding, two-dimensional planes;
- means for determining texture and geometry of each of separate bounding volumes from the decoded two-dimensional planes;
- means for determining separate bounding volumes from a tree structure of a bounding volume hierarchy;
- means for reconstructing rigid elements of a three-dimensional volumetric video object from the separate bounding volumes; and
- means for reconstructing the volumetric video from the decoded bounding volume hierarchy, wherein the wherein the bounding volume hierarchy represents bounding volumes of rigid elements in a volumetric video object.

## Patentansprüche

1. Verfahren zum Codieren, das Folgendes umfasst:
- Empfangen eines volumetrischen Videos;
- Identifizieren von starren Elementen eines dreidimensionalen volumetrischen Videoobjekts im volumetrischen Video, wobei die starren Elemente durch separate Begrenzungsvolumina repräsentiert sind;
- Anordnen der separaten Begrenzungsvolumina in einer Baumstruktur einer Begrenzungsvolumenhierarchie;
- Projizieren einer Textur und einer Geometrie von jedem der separaten Begrenzungsvolumina zum Codieren auf entsprechende zweidimensionale Ebenen;
- Codieren jeder zweidimensionalen Ebene mit einer zweidimensionalen Videocodierung in einen Bitstrom;
- Codieren einer dreidimensionalen Bewegung, die als eine Drehung und eine Umsetzung der starren Elemente repräsentiert ist, durch Codieren einer dreidimensionalen Deltabewegung der starren Elemente mit Bezug auf einen Elternknoten in der Begrenzungsvolumenhierarchie;
- wenn zwischen zeitlich benachbarten Textur- oder Geometrieebenen ein Rest vorhanden ist, Codieren des Rests gemäß der zweidimensionalen Videocodierung in einen Bitstrom;
- Codieren der Begrenzungsvolumenhierarchie; und
- Übertragen der codierten Bitströme und der codierten dreidimensionalen Bewegung und Begrenzungsvolumenhierarchie zum Rendern.

2. Verfahren nach Anspruch 1, das ferner das Positionieren des dreidimensionalen volumetrischen Videoobjekts mittels eines Szenengraphen umfasst.

3. Verfahren zum Decodieren, das Folgendes umfasst
- Empfangen von codierten Videobitströmen und einer codierten dreidimensionalen Bewegung und Begrenzungsvolumenhierarchie;
- Decodieren einer Begrenzungsvolumenhierarchie aus der codierten Begrenzungsvolumenhierarchie;
- Decodieren einer dreidimensionalen Bewegung, die als eine Drehung und eine Umsetzung von starren Elementen repräsentiert ist, aus einer codierten dreidimensionalen Bewegung durch Decodieren einer dreidimensionalen Deltabewegung der starren Elemente mit Bezug auf einen Elternknoten in der Begrenzungsvolumenhierarchie;
- Decodieren eines Rests, sofern vorhanden, aus den empfangenen Videobitströmen, wobei sich der Rest zwischen zeitlich benachbarten Textur- oder Geometrieebenen befindet;
- Decodieren von zweidimensionalen Ebenen aus den empfangenen Videobitströmen mit einer zweidimensionalen Videodecodierung;
- Bestimmen einer Textur und einer Geometrie von jedem von separaten Begrenzungsvolumina aus den decodierten zweidimensionalen Ebenen;
- Bestimmen von separaten Begrenzungsvolumina anhand einer Baumstruktur einer Begrenzungsvolumenhierarchie;
- Rekonstruieren von starren Elementen eines dreidimensionalen volumetrischen Videoobjekts anhand der separaten Begrenzungsvolumina; und
- Rekonstruieren eines volumetrischen Videos anhand der decodierten Begrenzungsvolumenhierarchie, einer dreidimensionalen Bewegung und der starren Elemente.

4. Vorrichtung zum Codieren, die Folgendes umfasst:
- Mittel zum Empfangen eines volumetrischen Videos;
- Mittel zum Identifizieren von starren Elementen eines dreidimensionalen volumetrischen Videoobjekts im volumetrischen Video, wobei die starren Elemente durch separate Begrenzungsvolumina repräsentiert sind;
- Mittel zum Anordnen der separaten Begrenzungsvolumina in einer Baumstruktur einer Begrenzungsvolumenhierarchie;
- Mittel zum Projizieren einer Textur und einer Geometrie von jedem der separaten Begrenzungsvolumina zum Codieren auf entsprechende zweidimensionale Ebenen;
- Mittel zum Codieren jeder zweidimensionalen Ebene mit einer zweidimensionalen Videocodierung in einen Bitstrom;
- Mittel zum Codieren einer dreidimensionalen Bewegung, die als eine Drehung und eine Umsetzung der starren Elemente repräsentiert ist, durch Codieren einer dreidimensionalen Deltabewegung der starren Elemente mit Bezug auf einen Elternknoten in der Begrenzungsvolumenhierarchie;
- wenn zwischen zeitlich benachbarten Textur- oder Geometrieebenen ein Rest vorhanden ist, Mittel zum Codieren des Rests gemäß der zweidimensionalen Videocodierung in einen Bitstrom;
- Mittel zum Codieren der Begrenzungsvolumenhierarchie; und
- Mittel zum Übertragen der codierten Bitströme und der codierten dreidimensionalen Bewegung und Begrenzungsvolumenhierarchie zum Rendern.

5. Vorrichtung nach Anspruch 4, die ferner Mittel zum Positionieren des dreidimensionalen volumetrischen Videoobjekts mittels eines Szenengraphen umfasst.

6. Computerprogrammprodukt, das sich auf einem nichttransitorischen computerlesbaren Medium befindet, das einen Computerprogrammcode umfasst, der dazu ausgelegt ist, wenn er auf mindestens einem Prozessor ausgeführt wird, eine Vorrichtung oder ein System zu Folgendem zu veranlassen:
- Empfangen eines volumetrischen Videos;
- Identifizieren von starren Elementen eines dreidimensionalen volumetrischen Videoobjekts im volumetrischen Video, wobei die starren Elemente durch separate Begrenzungsvolumina repräsentiert sind;
- Anordnen der separaten Begrenzungsvolumina in einer Baumstruktur einer Begrenzungsvolumenhierarchie;
- Projizieren einer Textur und einer Geometrie von jedem der separaten Begrenzungsvolumina zum Codieren auf entsprechende zweidimensionale Ebenen;
- Codieren jeder zweidimensionalen Ebene mit einer zweidimensionalen Videocodierung in einen Bitstrom;
- Codieren einer dreidimensionalen Bewegung, die als eine Drehung und eine Umsetzung der starren Elemente repräsentiert ist, durch Codieren einer dreidimensionalen Deltabewegung der starren Elemente mit Bezug auf einen Elternknoten in der Begrenzungsvolumenhierarchie;
- wenn zwischen zeitlich benachbarten Textur- oder Geometrieebenen ein Rest vorhanden ist, Codieren des Rests gemäß der zweidimensionalen Videocodierung;
- Codieren der Begrenzungsvolumenhierarchie; und
- Übertragen der codierten Bitströme und der codierten dreidimensionalen Bewegung und Begrenzungsvolumenhierarchie zum Rendern.

7. Vorrichtung zum Decodieren, die Folgendes umfasst:
- Mittel zum Empfangen von codierten Videobitströmen und einer codierten dreidimensionalen Bewegung und Begrenzungsvolumenhierarchie;
- Mittel zum Decodieren einer Begrenzungsvolumenhierarchie aus der codierten Begrenzungsvolumenhierarchie;
- Mittel zum Decodieren einer dreidimensionalen Bewegung, die als eine Drehung und eine Umsetzung von starren Elementen repräsentiert ist, aus einer codierten dreidimensionalen Bewegung durch Decodieren einer dreidimensionalen Deltabewegung der starren Elemente mit Bezug auf einen Elternknoten in der Begrenzungsvolumenhierarchie;
- Mittel zum Decodieren eines Rests, sofern vorhanden, aus den empfangenen Videobitströmen, wobei sich der Rest zwischen zeitlich benachbarten Textur- oder Geometrieebenen befindet;
- Mittel zum Decodieren von zweidimensionalen Ebenen aus den empfangenen Videobitströmen mit einer zweidimensionalen Videodecodierung;
- Mittel zum Bestimmen einer Textur und einer Geometrie von jedem von separaten Begrenzungsvolumina aus den decodierten zweidimensionalen Ebenen;
- Mittel zum Bestimmen von separaten Begrenzungsvolumina anhand einer Baumstruktur einer Begrenzungsvolumenhierarchie;
- Mittel zum Rekonstruieren von starren Elementen eines dreidimensionalen volumetrischen Videoobjekts anhand der separaten Begrenzungsvolumina; und
- Mittel zum Rekonstruieren des volumetrischen Videos aus der decodierten Begrenzungsvolumenhierarchie, wobei die wobei die Begrenzungsvolumenhierarchie Begrenzungsvolumina von starren Elementen in einem volumetrischen Videoobjekt repräsentieren.

## Revendications

1. Procédé de codage, comprenant :
- la réception d'une vidéo volumétrique ;
- l'identification d'éléments rigides d'un objet vidéo volumétrique tridimensionnel à partir de la vidéo volumétrique, lesdits éléments rigides étant représentés par des volumes de délimitation distincts ;
- l'agencement des volumes de délimitation distincts dans une structure d'arbre d'une hiérarchie de volumes de délimitation ;
- la projection de la texture et de la géométrie de chacun des volumes de délimitation distincts sur des plans bidimensionnels correspondants pour le codage ;
- le codage de chaque plan bidimensionnel à l'aide d'un codage vidéo bidimensionnel dans un train de bits ;
- le codage d'un mouvement tridimensionnel représenté par la rotation et la translation des éléments rigides en codant un déplacement tridimensionnel delta des éléments rigides par rapport à un noeud parent dans la hiérarchie de volumes de délimitation ;
- s'il existe un résidu entre des plans de texture ou de géométrie temporellement adjacents, le codage du résidu selon un codage vidéo bidimensionnel dans un train de bits ;
- le codage de la hiérarchie de volumes de délimitation ; et
- la transmission des trains de bits codés et le mouvement tridimensionnel et la hiérarchie de volumes de délimitation codés pour le rendu.

2. Procédé selon la revendication 1, comprenant en outre le positionnement de l'objet vidéo volumétrique tridimensionnel au moyen d'un graphique de scène.

3. Procédé de décodage, comprenant
- la réception de trains de bits vidéo codés et d'un mouvement tridimensionnel et d'une hiérarchie de volumes de délimitation codés ;
- à partir de la hiérarchie de volumes de délimitation codée, le décodage de la hiérarchie de volumes de délimitation ;
- à partir du mouvement tridimensionnel codé, le décodage du mouvement tridimensionnel représenté par la rotation et la translation d'éléments rigides en décodant le déplacement tridimensionnel delta des éléments rigides par rapport à un noeud parent dans la hiérarchie de volumes de délimitation ;
- à partir des trains de bits vidéo reçus, le décodage d'un résidu, le cas échéant, ledit résidu se trouvant entre des plans de texture ou de géométrie temporellement adjacents ;
- à partir des trains de bits vidéo reçus, le décodage des plans bidimensionnels à l'aide d'un décodage vidéo bidimensionnel ;
- la détermination de la texture et la géométrie de chacun de volumes de délimitation distincts à partir des plans bidimensionnels décodés ;
- la détermination de volumes de délimitation distincts à partir d'une structure d'arbre d'une hiérarchie de volumes de délimitation ;
- la reconstruction des éléments rigides d'un objet vidéo volumétrique tridimensionnel à partir des volumes de délimitation distincts ; et
- la reconstruction d'une vidéo volumétrique à partir de la hiérarchie de volumes de délimitation, du mouvement tridimensionnel et des éléments rigides décodés.

4. Appareil de codage, comprenant :
- des moyens pour recevoir une vidéo volumétrique ;
- des moyens pour identifier des éléments rigides d'un objet vidéo volumétrique tridimensionnel à partir de la vidéo volumétrique, lesdits éléments rigides étant représentés par des volumes de délimitation distincts ;
- des moyens pour agencer les volumes de délimitation distincts dans une structure d'arbre d'une hiérarchie de volumes de délimitation ;
- des moyens pour projeter la texture et la géométrie de chacun des volumes de délimitation distincts sur des plans bidimensionnels correspondants pour le codage :
- des moyens pour coder chaque plan bidimensionnel à l'aide d'un codage vidéo bidimensionnel dans un train de bits ;
- des moyens pour coder un mouvement tridimensionnel représenté par la rotation et la translation des éléments rigides en codant un déplacement tridimensionnel delta des éléments rigides par rapport à un noeud parent dans la hiérarchie de volumes de délimitation ;
- s'il existe un résidu entre des plans de texture ou de géométrie temporellement adjacents, des moyens pour coder le résidu selon un codage vidéo bidimensionnel dans un train de bits ;
- des moyens pour coder la hiérarchie de volumes de délimitation ; et
- des moyens pour transmettre les trains de bits codés et le mouvement tridimensionnel et la hiérarchie de volumes de délimitation codés pour le rendu.

5. Appareil selon la revendication 4, comprenant en outre des moyens pour positionner l'objet vidéo volumétrique tridimensionnel au moyen d'un graphique de scène.

6. Produit de programme informatique incorporé dans un support non transitoire lisible par ordinateur, comprenant un code de programme informatique configuré pour, lorsqu'il est exécuté sur au moins un processeur, amener un appareil ou un système à :
- recevoir une vidéo volumétrique ;
- identifier des éléments rigides d'un objet vidéo volumétrique tridimensionnel à partir de la vidéo volumétrique, lesdits éléments rigides étant représentés par des volumes de délimitation distincts ;
- agencer les volumes de délimitation distincts dans une structure d'arbre d'une hiérarchie de volumes de délimitation ;
- projeter la texture et la géométrie de chacun des volumes de délimitation distincts sur des plans bidimensionnels correspondants pour le codage :
- coder chaque plan bidimensionnel à l'aide d'un codage vidéo bidimensionnel dans un train de bits ;
- coder un mouvement tridimensionnel représenté par la rotation et la translation des éléments rigides en codant un déplacement tridimensionnel delta des éléments rigides par rapport à un noeud parent dans la hiérarchie de volumes de délimitation ;
- s'il existe un résidu entre des plans de texture ou de géométrie temporellement adjacents, coder le résidu selon un codage vidéo bidimensionnel ;
- coder la hiérarchie de volumes de délimitation ; et
- transmettre les trains de bits codés et le mouvement tridimensionnel et la hiérarchie de volumes de délimitation codés pour le rendu.

7. Appareil de décodage, comprenant :
- des moyens pour recevoir des trains de bits vidéo codés et un mouvement tridimensionnel et une hiérarchie de volumes de délimitation codés ;
- des moyens pour, à partir d'une hiérarchie de volumes de délimitation codée, décoder une hiérarchie de volumes de délimitation ;
- des moyens pour, partir d'un mouvement tridimensionnel codé, décoder le mouvement tridimensionnel représenté par la rotation et la translation d'éléments rigides en décodant le déplacement tridimensionnel delta des éléments rigides par rapport à un noeud parent dans la hiérarchie de volumes de délimitation ;
- des moyens pour, à partir des trains de bits vidéo reçus, décoder un résidu, le cas échéant, ledit résidu se trouvant entre des plans de texture ou de géométrie temporellement adjacents ;
- des moyens pour, à partir des trains de bits vidéo reçus, décoder les plans bidimensionnels à l'aide d'un décodage vidéo bidimensionnel ;
- des moyens pour déterminer la texture et la géométrie de chacun des volumes de délimitation distincts à partir des plans bidimensionnels décodés ;
- des moyens pour déterminer volumes de délimitation distincts à partir d'une structure d'arbre d'une hiérarchie de volumes de délimitation ;
- des moyens pour reconstruire les éléments rigides d'un objet vidéo volumétrique tridimensionnel à partir des volumes de délimitation distincts ; et
- des moyens pour reconstruire la vidéo volumétrique à partir de la hiérarchie de volumes de délimitation décodée, dans lequel la hiérarchie de volumes de délimitation représente les volumes de délimitation d'éléments rigides dans un objet vidéo volumétrique.
